# EUROPEAN PATENT SPECIFICATION

(11) **EP 2 938 925 B1**
(45) Date of publication and mention of the grant of the patent: **30.10.2019**
(21) Application number: 13830083.5
(22) Date of filing: 30.12.2013
(51) Int. Cl.: F24H 9/18, F24H 9/20, F22B 1/30, F24H 1/10, H05B 1/02

(54) **ELECTRODE BOILER FEATURING VARIABLE AND CONTROLLED OUTPUT**
ELEKTRODENKESSEL MIT VARIABLER UND GEREGELTER AUSGANGSLEISTUNG
CHAUDIÈRE À ÉLECTRODE ÉQUIPÉE D'UNE SORTIE VARIABLE ET RÉGULÉE

(30) Priority: 31.12.2012 GR 20120100662; 23.12.2013 GR 20130100705
(43) Date of publication of application: 04.11.2015
(73) Proprietor: Steelmax Tech SA, 11744 Athens (GR)
(72) Inventor: PSOMIADIS, Charalampos, 60100 Katerini (GR)
(74) Representative: ZBM Patents - Zea, Barlocci & Markvardsen
(86) International application number: PCT/GR2013/000070
(87) International publication number: WO 2014/102554

(56) References cited:
- WO-A1-2009/100486
- WO-A1-2010/134930
- DE-A1-102009 044 161
- DE-C- 306 280
- US-A- 3 688 077
- US-A- 5 866 880

## Description

This invention refers to electric boilers used to heat the interior of buildings.

Electrode boilers are widely used for heating purposes in buildings. Electrode boilers use the heat generated during the flow of alternating current through streams of water. The heat is then transferred to the radiators via a network of pipes Electrode boilers are disclosed for example in documents WO 2009/100486 A1 and DE 306 280 C.

Electrode boilers comprise a metal cylinder connected to the neutral conductor and an electrode connected to the current phase inside the cylinder. The cylinder and electrode are made of cast iron and there is electrical insulation at their point of contact. When the liquid flows through the cylinder, the electric current passes through and heats it.

The cylinder and electrode dimensions are standard and determine the apparatus electric output based on the electrode's contact area with the water or with the glycol-water mixture found in a closed loop circuit transferring the heat to the water inside the radiators via an exchanger.

The fact that the electrode surface is fixed is a drawback for such systems because electrical conductivity varies and is dependent on the existence of ions, the concentration, migration speed and valence thereof and on temperature variation; this results in the system not having a fixed capacity thus requiring an exchanger and a closed circuit wherein the glycol liquid is of a predetermined quality.

In case of current leakage, the cylinder is hazardous as it is not compliant with the electrical regulation, which provides for the existence of protective grounding.

Additional drawbacks to those heating systems are the following: the increased time required to reach the desirable temperature; the inability to regulate the operational electric load so as to simultaneously operate with other energy-consuming appliances; and the inability to manage and control the energy output.

Documents describing previous techniques: WO2009100486 A1/(MICROHEAT TECHNOLOGIES PTY LTD & AL) 20.08.2009, GB2268671 A/(ELECTRICITY ASS TECH, EA TECH LTD) 12.01.1994, US3688077 A/(WILLIAMS STANLEY AUSTEN) 29.08.1972, GB1499375 A/(GOETEBORGS ANALYSLABOR AB) 01.02.1978.

The electrode boiler according to independent claim 1 of the present invention improves the efficiency output, operational safety and the cost of manufacturing of the Electrode boiler featuring variable and controlled output.

The purpose of this invention is to create an electrode boiler featuring variable and controlled output in accordance with what is stated above such a boiler being more efficient, safer, less costly to manufacture and ensuring variable and controlled operation output based on the thermal load required without an exchanger and a closed loop circuit for liquids.

According to the invention, this is achieved with the use of metal plates internally adjusted on a plastic core connected to the phase (single-phase) or phases of current (three-phase). The plastic core contains the neutral conductor, which is made of steel and comprises a solid cylindrical bar surrounded by the circuit liquid. The water inside the core is heated by the electricity flowing through it and comes out using a circulator.

The electrode boiler featuring variable and controlled output takes advantage of the heat that is rapidly generated when alternating current flows through streams of liquid. The liquid heated by the electrode boiler featuring variable and controlled output flows through the interconnected radiators which radiate the heat into the surrounding environment.

The efficiency output can be modified by using a priority controller, an electronic processing unit and a power unit according to the data received by the area and water sensors and by the user.

The priority controller comprises a microcontroller. Given the microcontroller is a standardised product widely used in built-in systems such as in automation and electronic products, its design features and operation are not analysed. It performs the following function: based on the consumption of power required by the remaining appliances in the facility, it distributes power first to such appliances and thereafter to the electrode boiler featuring variable and controlled output. In essence, the microcontroller receives from the facility panel-board the information concerning the power consumption, converts it into digital information and transfers it to the processing unit which uses its respective software in order to send a command to the power unit to reduce the power supplied.

The power unit comprises a microcontroller and an electronic power switch (solid state relay SSR or TRIAC), which are standardised products widely used in built-in systems such as in automation and electronic products and their design features and operations are not analysed. The power unit performs the following function: it receives commands from the electronic processing unit and distributes the electric power to the circuit.

If other power-consuming electric devices are turned on in the same electrical installation, the power unit reduces the consumption of power.

Power is supplied to the radiator via the power unit in the form of electrical pulses; electro-stimulation is achieved via electrical pulses, i.e. half-cycles of alternating current flowing through the liquid. Power is intermittently transferred to the electrical circuit via the SSRs. This is a difference as compared to all pre-existing systems transferring electrical power through liquids to generate heat. In the case of the autonomous electrode radiator, the power supply is intermittent using the power unit, and controlled by the processing unit.

This invention features the following: a) regulation of the heat output using a priority controller, an electronic processing unit and a power unit, irrespective of the conductivity of the water flowing through the plastic core; b) this invention may operate using both single-phase and three-phase current; when using three-phase electricity, each phase is connected to sets of three curved plates; c) this invention may be adjusted via the electronic processing unit so as to operate using specific amount of power; d) this invention does not require a closed circuit of liquid with a heat exchanger, thus reduces losses and improves the system's overall efficiency output.

This invention may be fully understood based on the following analytical description with reference to the attached drawings, wherein:

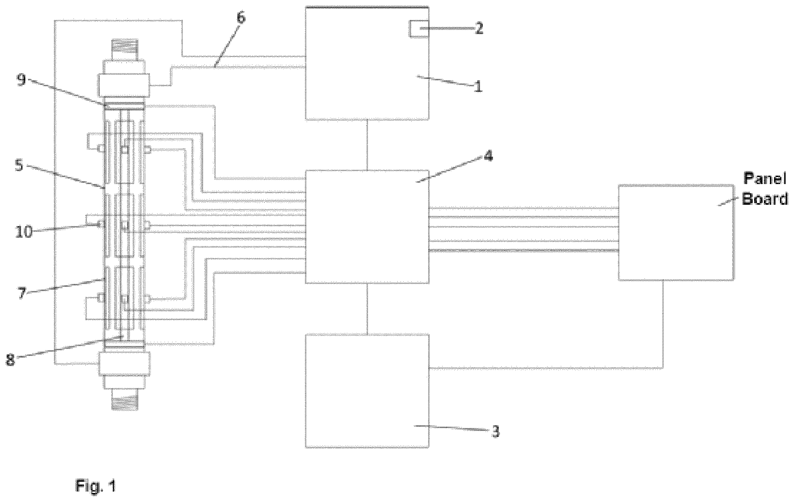

Figure 1 presents a diagrammatic plan view of the parts comprising the present invention; the electronic processing unit (1); the area (2) and water (6) sensors; the priority controller (3); the power unit (4); the plastic core (5); the curved metal plates (7); the metal rod (8), the metal neutral spacer (9); and the screw sealing and connecting the electrodes (10).
   The electronic processing unit (1) comprises a processor and a memory unit wherein the daily operation programme is stored. The water (6) and area (2) sensors, and the priority controller (3) are connected to the electronic processing unit (1).
   The electronic processing unit (1) determines the operation of the power unit (4) and in essence controls the power used.
   The power unit (4) receives control commands from the electronic processing unit (1) and distributes power to the circuit.
   Using the priority controller (3), the power unit (4) reduces the consumption of electric power in the event that other power-consuming electric devices are turned on in the same electrical installation.

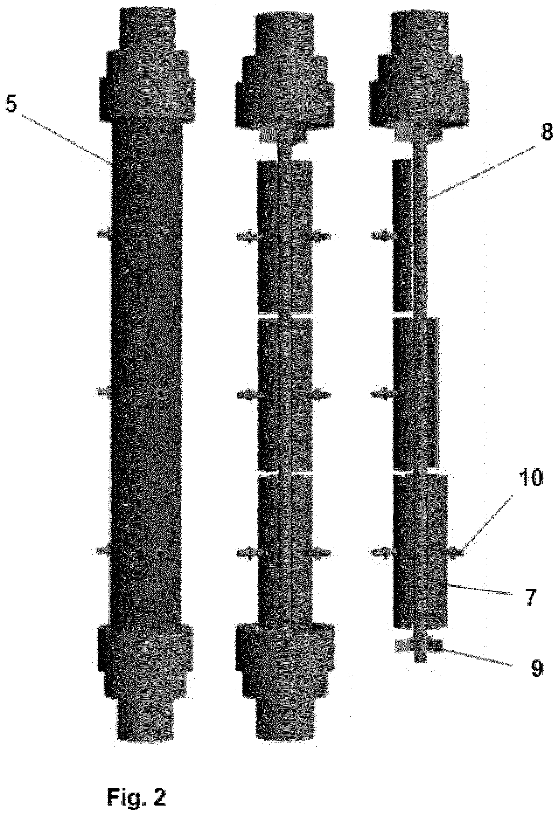

Figure 2 shows a perspective of the plastic core (5), which is made of plastic material in replacement of the cast iron cylinder ensuring insulation and reducing the risk of electric shock as it is not under load.

The metal rod (8) is made of steel and is placed inside the plastic core (5). Insulated curved metal plates (7) are arranged around the rod (8) inside the plastic core (5) without touching each other.

The curved metal plates (7) are connected to the electric power phases. The connections in this invention are reverse in comparison to the existing systems in the market.

The distribution of power via the power unit (4) is controlled electronically. The power unit (4) is controlled electronically by an electronic processing unit (1). The electronic processing unit (1) controls water temperature in real time by using water sensors (6) located in the water supply input and output, and area sensors (2) respectively. According to the information received from the above sensors, the power unit (4) distributes the electrical load pursuant to the power set, so as to achieve the desirable water output temperature.

In case of malfunction in the electronic processing unit (1) or if the temperature sensor (6) shows that output water temperature exceeds 90°C, then the power unit (4) shall interrupt the power supply via a safety fuse. If a current phase is lost when operating in a three-phase connection, then the power unit (4) distributes the remaining power depending on the status of operational use; the power supply to the processing unit (1) continues uninterrupted.

The processing unit (1) controls the operation of the circulator which is placed in the system output. The circulator starts to operate when water temperature reaches 15°C and gradually increases the water circulation speed until water reaches 40°C; thereafter, the circulator operates constantly at maximum capacity and the heat delivered to the water is managed the power unit (4).

## Claims

1. An electrode boiler featuring variable and controlled output for producing hot water for the purpose of heating closed areas, comprising:
an area sensor (2);
a water sensor (6);
an electronic processing unit (1) coupled to the area and water sensors ;
a power unit (4) controlled by the electronic processing unit;
a priority controller (3) connected to the power unit (4) and connectable to a panel-board;
a cylindrical metal rod (8);
a metal neutral spacer (9) coupled to the cylindrical metal rod (8);
a plastic core (5) container around the cylindrical metal rod (8)and spaced apart from the cylindrical metal rod (8)with the metal neutral spacer (9);
curved metal plates (7) arranged inside the plastic core, each metal plate (7) connected to the power unit (4) with electrodes (10); and
screws connecting and sealing the electrodes (10);
wherein the cylindrical metal rod (8) is connected to the power unit (4) to heat liquid flowing inside the plastic core (5) by generating heat when alternating current flows intermittently via electrical impulses generated by the power unit (4) and determined by the electronic processing unit (1); and the priority controller (3) is configured to distribute power from the power unit (4) to the boiler and to other appliances connected to the panel board based on consumption information of the other appliances.

2. The electrode boiler according to claim 1, wherein the curved metal plates (7) are adjusted inside the plastic core (5) and are connected to at least one phase of current supply by using the screw connecting and sealing the electrodes (10).

3. The electrode boiler according to any of claims 1 to 2, wherein the cylindrical metal rod (8) comprises a neutral steel conductor, the neutral steel conductor being surrounded by the liquid and remaining fixed using the metal neutral spacer (9).

4. The electrode boiler according to any of claims 1 to 3, wherein the liquid inside the plastic core (5) is heated by electric power that flows through it and comes out using a circulator that circulates the liquid and streams it to radiators via a network of pipes.

5. The electrode boiler according to any of claims 1 to 4, wherein the priority controller (3), the electronic processor unit (1) and the power unit (4) are configured to ensure self-regulation of any operational power load required when used simultaneously with other energy-consuming appliances.

6. The electrode boiler according to any of claims 1 to 5, wherein the power unit (4) is configured to distribute electric power in the circuit by virtue of electrical pulses, allotting different periods of alternating current per second, depending on power required as set by input from a user, the priority controller (3) and the electronic processor unit (1).

7. The electrode boiler according to any of claims 1 or 2, wherein based on information received from the water sensors (6) located at an input and an output of the plastic core (5), the electronic processing unit (1) is configured to distribute electric power set by a user through the power unit (4) in order to achieve a desired water temperature at the output.

## Patentansprüche

1. Ein Elektrodenkessel mit variabler und geregelter Ausgangsleistung zur Herstellung von heißem Wasser zur Beheizung von geschlossenen Bereichen, umfassend:
einen Bereichssensor (2); einen Wassersensor (6);
eine an den Bereich- und den Wassersensor gekoppelte elektronische Verarbeitungseinheit (1);
eine durch die elektronische Verarbeitungseinheit geregelte Leistungseinheit (4);
ein mit der Leistungseinheit (4) verbundenes und mit einem elektrischen Verteiler verbindbares Vorrangssteuergerät (3);
eine zylindrische metallische Stange (8);
einen an die zylindrische metallische Stange (8) gekoppelten metallischen neutralen Abstandshalter (9);
einen um die zylindrische metallische Stange (8) herum vorhandenen und mittels des metallischen neutralen Abstandshalters (9) von der zylindrischen metallischen Stange (8) räumlich getrennten auf einem Kunstoffkern (5) basierenden Behälter;
innerhalb des Kunstoffkerns angeordnete gekrümmte metallische Platten (7), wobei jede metallische Platte (7) mit der Leistungseinheit (4) mittels Elektroden (10) verbunden ist; und
Schrauben, welche die Elektroden (10) verbinden und versiegeln;
wobei die zylindrische metallische Stange (8) mit der Leistungseinheit (4) verbunden ist, um innerhalb des Kunstoffkerns (5) fließende Flüssigkeit zu erhitzen, in dem Hitze erzeugt wird, wenn Wechselstrom abwechselnd mittels elektrischer Impulse fließt, die durch die Leistungseinheit (4) erzeugt und durch die elektronische Verarbeitungseinheit (1) bestimmt werden; und wobei das Vorrangssteuergerät (3) konfiguriert ist, um den Kessel und andere mit dem elektrischen Verteiler verbundene Verbraucher, beruhend auf Verbrauchsinformationen der anderen Verbraucher mit Leistung aus der Leistungseinheit (4) zu versorgen.

2. Der Elektrodenkessel nach Anspruch 1, wobei die gekrümmten metallischen Platten (7) innerhalb des Kunstoffkerns (5) eingepasst sind und sie an mindestens einer Phase der Stromversorgung durch den Einsatz der Schraube angeschlossen sind, welche die Elektroden (10) verbindet und versiegelt.

3. Der Elektrodenkessel nach einem der Ansprüche 1 bis 2, wobei die zylindrische metallische Stange (8) einen neutralen Stahlleiter umfasst, wobei der neutrale Stahlleiter durch die Flüssigkeit umgeben ist und durch den Einsatz des metallischen neutralen Abstandshalters (9) fest angebracht bleibt.

4. Der Elektrodenkessel nach einem der Ansprüche 1 bis 3, wobei die Flüssigkeit innerhalb des Kunstoffkerns (5) mittels elektrischer Leistung erhitzt wird, welche durch diesen fließt und durch den Einsatz von einer Umwälzpumpe herausfließt, welche die Flüssigkeit umwälzt und diese mittels eines Röhrennetzes zu Heizkörpern fließen lässt.

5. Der Elektrodenkessel nach einem der Ansprüche 1 bis 4, wobei das Vorrangssteuergerät (3), die elektronische Verarbeitungseinheit (1) und die Leistungseinheit (4) konfiguriert sind, um die Selbststeuerung von einer betrieblichen Leistungsbelastung zu gewährleisten, die gebraucht wird, wenn sie gleichzeitig mit anderen energieverbrauchenden Geräten benutzt werden.

6. Der Elektrodenkessel nach einem der Ansprüche 1 bis 5, wobei die Leistungseinheit (4) konfiguriert ist, um elektrische Leistung im Kreis mittels elektrischer Impulse zu verteilen, wobei verschiedene Perioden von Wechselstrom pro Sekunde in Abhängigkeit von der gemäß der Eingabe durch einen Benutzer, dem Vorrangssteuergerät (3) und der elektronischen Verarbeitungseinheit (1) bestimmten gebrauchten Leistung zugeteilt werden.

7. Der Elektrodenkessel nach einem der Ansprüche 1 oder 2, wobei die elektronische Verarbeitungseinheit (1), beruhend auf der von den an einem Eingang und einem Ausgang des Kunstoffkerns (5) angeordneten Wassersensoren (6) empfangenen Information, konfiguriert ist, um elektronische Leistung, die durch einen Benutzer bestimmt worden ist, durch die Leistungseinheit (4) zu verteilen, um eine gewünschte Wassertemperatur am Ausgang zu erreichen.

## Revendications

1. Une chaudière à électrodes équipée d'une sortie variable et régulée pour produire de l'eau chaude pour des fins de chauffage de zones fermées, comprenant :
un capteur de zone (2) ; un capteur d'eau (6) ;
une unité de traitement électronique (1) couplée aux capteurs de zone et d'eau ;
une unité de puissance (4) contrôlée par l'unité de traitement électronique ;
un dispositif de commande par priorité (3) relié à l'unité de puissance (4) et qui peut être relié à un tableau électrique ;
une tige en métal cylindrique (8) ;
un élément d'écartement neutre en métal (9) couplé à la tige en métal cylindrique (8) ;
un récipient à noyau en plastique (5) disposé autour de la tige en métal cylindrique (8) et espacé par rapport à la tige en métal cylindrique (8) moyennant l'élément d'écartement neutre en métal (9) ;
des plaques métalliques courbes (7) disposées dans l'intérieur du noyau en plastique, chaque plaque métallique (7) étant reliée à l'unité de puissance (4) avec des électrodes (10) ; et
des vis reliant et scellant des électrodes (10) ;
dans laquelle la tige en métal cylindrique (8) est reliée à l'unité de puissance (4) pour échauffer du liquide circulant dans le noyau en plastique (5) en générant de la chaleur lorsque du courant alternatif circule de manière intermittente moyennant des impulsions électriques générées par l'unité de puissance (4) et déterminées par l'unité de traitement électronique (1) ; et le dispositif de commande par priorité (3) est configuré pour distribuer de la puissance de l'unité de puissance (4) à la chaudière et à d'autres appareils reliés au tableau électrique à partir d'information sur la consommation des autres appareils.

2. La chaudière à électrodes selon la revendication 1, dans laquelle les plaques métalliques courbes (7) sont ajustées dans l'intérieur du noyau plastique (5) et sont reliées à au moins une phase d'alimentation en courant en utilisant la vis reliant et scellant les électrodes (10).

3. La chaudière à électrodes selon l'une quelconque des revendications 1 à 2, dans laquelle la tige en métal cylindrique (8) comprend un conducteur en acier neutre, le conducteur en acier neutre étant entouré par le liquide et restant fixé en utilisant l'élément d'écartement neutre en métal (9).

4. La chaudière à électrodes selon l'une quelconque des revendications 1 à 3, dans laquelle le liquide dans le noyau en plastique (5) est échauffé par la puissance électrique qui circule à travers celui-ci et sort en utilisant une pompe de circulation qui fait circuler le liquide et le fait couler vers des radiateurs moyennant un réseau de tuyaux.

5. La chaudière à électrodes selon l'une quelconque des revendications 1 à 4, dans laquelle le dispositif de commande par priorité (3), l'unité de traitement électronique (1) et l'unité de puissance (4) sont configurés pour garantir l'auto-régulation de toute charge de puissance opérationnelle requise lorsqu'ils sont utilisés de façon simultanée avec d'autres appareils consommateurs d'énergie.

6. La chaudière à électrodes selon l'une quelconque des revendications 1 à 5, dans laquelle l'unité de puissance (4) est configurée pour distribuer de la puissance électrique dans le circuit par voie d'impulsions électriques, attribuant des périodes différentes de courant alternatif par seconde, en fonction de la puissance requise telle qu'établie selon l'entrée donnée par un utilisateur, le dispositif de commande par priorité (3) et l'unité de traitement électronique (1).

7. La chaudière à électrodes selon l'une quelconque des revendications 1 ou 2, dans laquelle, sur la base de l'information reçue des capteurs d'eau (6) situés à l'entrée et la sortie du noyau en plastique (5), l'unité de traitement électronique (1) est configurée pour distribuer de la puissance électrique établie par un utilisateur moyennant l'unité de puissance (4) afin d'atteindre une température de l'eau désirée à la sortie.
